# EUROPEAN PATENT APPLICATION

(11) **EP 4 039 090 A1**
(43) Date of publication of application: **10.08.2022**
(21) Application number: 21155796.2
(22) Date of filing: 08.02.2021
(51) Int. Cl.: A01M 1/10

(54) **DEVICE FOR CONTROLLING GRAY SILVERFISH CTENOLEPISMA LONGICAUDATUM**

(71) Applicant: Citytox ApS, 2610 Rødovre (DK)
(72) Inventor: TEIL, Thomas, 2610 Rødovre (DK)
(74) Representative: Guardian IP Consulting I/S

(57) **Abstract**

The invention relates to a device for controlling gray silverfish Ctenolepisma longicaudatum. The device comprises a carrying tape. The device further comprises two or more attraction sites arranged along the carrying tape in a mutual distance. The attraction site comprises an insecticide and an attraction site cover. The attraction site cover is adapted to together with the carrying tape enclosing the insecticide for controlling gray silverfish, the attraction site cover is further adapted to be penetrable by gray silverfish.

## Description

### Field of the invention

The present invention relates to a device for controlling Ctenolepisma longicaudatum, known by the common names gray silverfish, long-tailed silverfish, and paper silverfish.

### Background of the invention

Gray silverfish is a pest that is increasingly found in households and other buildings throughout Europe and other parts of the world. This problem has in recent years become more common. Gray silverfish are known to digest cellulose, e.g. in paper and cellulose-based textiles like rayon, and may also be found eating flour and e.g. bread crumbs. Thus, they are unwanted in households, libraries, achieves etc. where they can cause harm to books and documents, and cause emotional distress and discomfort to residents, patrons, and visitors.

Controlling an unwanted population of gray silverfish in a building is generally considered a task for an exterminator, typically requiring insecticides not available to the general public.

Traps for gray silverfish are available from http://silverfish.no, based on the principle of attracting and drowning the gray silverfish.

Hence, an improved device for controlling a population of gray silverfish would be advantageous, and in particular a more efficient and/or improved device usable by private users would be advantageous.

### Object of the invention

It is an objective of the present innovation to overcome the presented limitations in the prior art. In particular, it is an objective to provide a safe and easy-to-use device for controlling gray silverfish.

It is a further object of the present invention to provide an alternative to the prior art.

### Summary of the invention

Thus, the above-described object and several other objects are intended to be obtained in a first aspect of the invention by providing a device for controlling gray silverfish Ctenolepisma longicaudatum. The device comprises a carrying tape. The device further comprises two or more attraction sites arranged along the carrying tape in a mutual distance. The attraction site comprises an insecticide and an attraction site cover. The attraction site cover is adapted to together with the carrying tape enclosing the insecticide for controlling gray silverfish, the attraction site cover is further adapted to be penetrable by gray silverfish. In this way, the carrying tape of the device may be placed in an area to be controlled, such as on a floor, along a wall. Since only small quantities of insecticide need to be used per attraction site, and since each attraction site is covered, the device is considered safe to use for a non-professional end user, such as a homeowner or a tenant. The gray silverfish are attracted to the attraction site where they will consume the insecticide. Since gray silverfish will also consume dead members of their species, the device will also work via secondary poisoning wherein directly poisoned members are consumed by other members, which are then poisoned. Deploying the device as a tape ensures ease of use while obtaining a good spatial covering in the area to be treated.

Preferably, the insecticide is selected to attract and be eaten by gray silverfish. This type of insecticide is particularly suitable for being used in the device according to the invention.

In a particular embodiment of the invention, the device comprises at least three attraction sites, such as at least five attraction sites, or even at least 10 attraction sites. Increasing the number of attraction sites enables a better area coverage for a give length of tape, or allows for a longer length of tape for a given covering.

In a particular embodiment of the invention, the mutual distance with which the attraction points are arranged along the carrying tape is in the range of about 0.1 m to about 1.0 m, such about 0.2 m to about 0.8 m, or even about 0.3 m to about 0.5 m. Having a distance between neighboring attraction sites in these ranges are found to be sufficiently fine-grained of the gray silverfish to easily be attracted by the attraction sites, while also being economical.

In some embodiments, the carrying tape comprises an elongated polymer band. In this way, an economical, flexible, and sufficiently strong carrying tape may be achieved. While the carrying tape is not intended to be suspended or free hanging for extended periods of time, the tape should preferably be sufficiently strong to allow for easy deployment and for minor mechanical influences, such as accidental impact during cleaning etc.

In a particular embodiment of the invention, the attraction site cover is at least partly made from paper or cardboard. In this way, the attraction site covers themselves will also act to attract the gray silverfish, which are known to attack paper, cardboard, and similar materials.

In a particular embodiment of the invention, the paper or cardboard contains at least 65% paper or cardboard made from sulphite pulp, such as at least 75% sulphite pulp, or even at least 80% sulphite pulp. Research has shown gray silverfish to be particularly attracted to paper or cardboard being made from these materials.

In an alternative embodiment of the device according to the invention the attraction site cover is or comprises gelatin. Gelatin is substantially airtight and may therefore be used to efficiently seal the insecticide and prevent its contact with atmospheric air, until the attraction site cover is penetrated by a gray silverfish or otherwise. In this way, an active life time of the device may be increased, since the insecticide is kept sealed until a gray silverfish breaks the seal. Common insecticides may for instance be active for 3 to 12 months when exposed to atmospheric air before becoming inactive, but may be stored for significantly longer when sealed. Thus, each individual attraction site remains sealed until actually attacked by gray silverfish, thereby extending the onset of the active period for each individual attraction site until needed. Furthermore, this embodiment may extend the shelf life of the device for the same reason.

In a particular embodiment of the invention, the carrying tape has a length of at least about 0.5 m up to about 5 m, such as at least about 1.0 m to about 4 m, or even at least about 1.5 m to about 3 m. A carrying tape having a length in these ranges have been found to both provide an attractive area covering while also being manageable for deployment and/or handling.

In a particular embodiment of the invention, the carrying tape has a width from 3 mm to 20 mm, such as from 5 mm to 15 mm, or even from 7 mm to 12 mm. Carrying tapes having widths in these ranges are found to provide a suitable tradeoff between flexibility and rigidity of the tape for easy deployment.

In a particular embodiment of the invention, the insecticide is or comprises a neonicotinoid. The group of neonicotinoids is particularly suited for controlling gray silverfish and various other insects and pests.

The device according to any one of the preceding claims, wherein the attraction site cover has a box-shaped geometry.

In a particular embodiment of the invention, the device further comprises a housing, the housing comprising an inner cavity adapted for taking up the carrying tape in a stored state, the housing further comprising an opening for retrieving the carrying tape into a deployed state. In this way, the carrying tape may be protected during transportation, display for sale, or storage.

In some embodiments, the housing is made from a polymer. This is convenient for efficiently fabricating the housing in the desired geometry.

In a particular embodiment of the invention, the carrying tape is coiled up when in the stored state. In this way, the carrying tape may be conveniently stored in the housing without needing to be folded. In some embodiments, this configuration for storing the carrying tape is advantageous for protecting the attraction sites from mechanical damage while being stored and as the carrying tape is being deployed.

In one embodiment, the housing comprises a crank for manually recoiling the carrying tape into the stored state after having been deployed.

In a particular embodiment of the invention, the device further comprises a torsion spring assembly wherein a first side of the torsion spring assembly is fixated to the housing and a second side of the torsion spring assembly is attached to the carrying tape, the torsion spring assembly being arranged to allow the carrying tape to be extendable from the stored state to the deployed state, and to allow the carrying tape be retractable from the deployed state to the stored state. In this way, the carrying tape may be deployed while at the same time storing mechanical energy in the torsion spring assembly, such that the mechanical energy may at a later time be used to retract the carrying tape back into the housing, i.e. back into the stored state. Subsequently, the carrying tape may then be deployed anew. This is for instance useful if an end user desires to move the device from one area of installation to another area, e.g. if the pest problem in the first area has been relieved and the other area is to be treated next. This may for instance also be useful for areas where it is e.g. inconvenient or unsafe to have the device deployed during the day, but where the device may be safely and effectively be used at night. In that case, the ability to quickly deploy and retract, respectively, the carrying tape is advantageous.

In a particular embodiment of the invention, the device further comprises a locking mechanism for maintaining the carrying tape extended in the deployed state. This is convenient for preventing the carrying tape to be retracted by the torsion spring assembly prematurely.

In a particular embodiment, the locking mechanism comprises a friction brake arranged in proximity to the opening of the housing, wherein the friction brake is engageable for maintaining a position of the carrying tape relative to the housing. In this way, a mechanically simple locking mechanism may be obtained, which may directly lock the carrying tape in position at a desired position, i.e. to provide a desired length of deployed carrying tape for the installation.

In alternative embodiments, the locking mechanism comprises a torsion spring lock, the torsion spring lock being configured for releasably locking rotation of the torsion spring assembly.

In some embodiments, the torsion spring lock may be configured to be disengageable by a slightly pull on the carrying tape. This type of mechanism is for instance known from roller blinds.

In other embodiments, the torsion spring lock may be configured to be disengageable by a push on an unlock button arranged on the housing.

In a particular embodiment of the invention, the carrying tape is configured in an accordion fold when in the stored state.

In a particular embodiment of the invention, the housing comprises an entry for gray silverfish, the entry providing access between an outside of the housing to an inner cavity of the housing, wherein the inner cavity stores the carrying tape in the stored state. In this way, the gray silverfish may access a part of the carrying tape stored inside the housing. Thus, the device both works to control the population of gray silverfish via a deployed part of the carrying tape and any remaining non-deployed part of the carrying tape. The device may even be used with the full length of the carrying tape stored inside the housing. Thereby, flexibility of use of the device is increased.

Preferably, the inner cavity of the housing has a clearance around the carrying tape in the stored state for allowing the gray silverfish access to an extended length of the carrying tape. In this context, an extended length is to be understood as lengths of the carrying tape exceeding an outer coil or a first fold if stored in a coiled or folded state, respectively. Thus, the gray silverfish are allowed to crawl under or over the coil or fold to reach an inner part of the carrying tape.

In a particular embodiment of the device according to the invention, the carrying tape is folded in the accordion fold whereby gray silverfish entering the housing of the device may have full access to both sides of substantially the full length of the carrying tape.

In a particular embodiment of the invention, the entry is a slit, the slit having a smallest dimension in the range of 1mm to 5 mm, such as 2 mm to 4 mm, or even about 3 mm. Slits of this size have been found to be sufficiently large for the gray silverfish to enter.

In some embodiments, the housing comprises a container section and a lid section wherein the container section and the lid section are mutually engageable to form the inner cavity, and wherein the container section and the lid section are separable to form the entry while being connected by one or more mechanical supports. In this way, a housing may be achieved that is compact when in an engaged or collapsed state, but may still provide the needed clearance to allow access for the gray silverfish when in the separated state.

In one embodiment, the container section and the lid section are slideable to move from the engaged state to the separated state.

In another embodiment, the container section and the lid section are configured to screw apart between the engaged state and the separated state.

According to an alternative aspect related to the invention, any of the embodiments of the device as described above may also be used for controlling an unwanted population of cockroaches, such as the German cockroach, American cockroach, Australian cockroach, or Oriental cockroach. In that case, any entries into a housing of the device must be sized according to the size of the species of cockroach targeted. For instance, an entry in the form of a slit may have a smallest dimension in the range 3mm to 10mm, such as 4mm to 8mm, or even 5mm to 7mm.

These and other aspects of the invention will be apparent from and elucidated with reference to the embodiments described hereinafter.

### Brief description of the figures

The device for controlling gray silverfish according to the invention will now be described in more detail with regard to the accompanying figures. The figures show one way of implementing the present invention and is not to be construed as being limiting to other possible embodiments falling within the scope of the attached claim set.
Figure 1a shows an embodiment of the device according to the invention comprising a carrying tape,
Figure 1b shows a cross-section along the line A-A in figure 1a according to one embodiment of the invention,
Figure 1c shows a cross-section along the line A-A in figure 1a according to another embodiment of the invention.
Figures 2a and 2b show other embodiments of the device according to the invention comprising a housing,
Figure 3 illustrates details of an embodiment comprising a torsion spring assembly,
Figure 4 illustrates details of an embodiment comprising a locking mechanism in form of a friction brake,
Figure 5 illustrates an alternative locking mechanism in the form of torsion spring lock,
Figures 6a and 6b show embodiments comprising different examples of openings to act as entry for gray silverfish,
Figure 7 illustrates different geometries of the housing, according to embodiments of the invention, and
Figure 8 illustrates an alternative embodiment of the carrying tape according to an embodiment of the invention.

### Detailed description of an embodiment

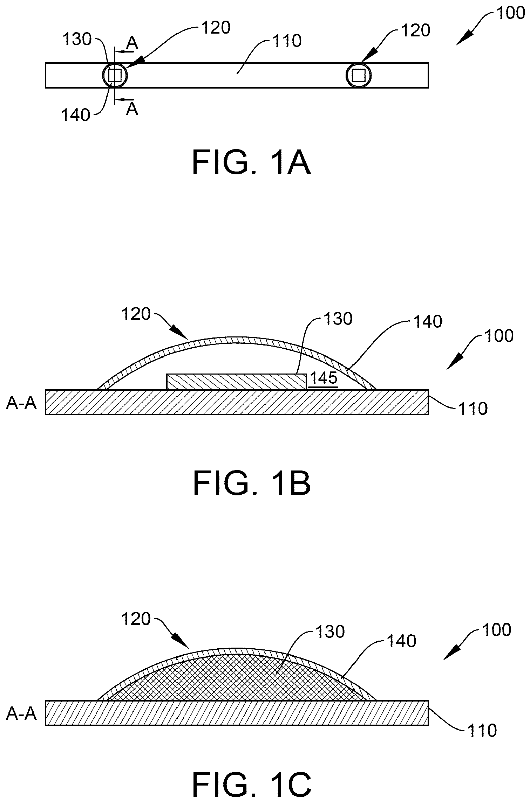

Figure 1a schematically illustrates an embodiment of the device 100 for controlling gray silverfish (Ctenolepisma longicaudata) according to the invention. The device 100 comprises a carrying tape 110, generally having a high aspect ratio. The device 100 is here shown to comprise two attraction sites 120 but may comprise any number of attraction sites, larger than one. Each attraction site 120 comprises an insecticide 130 that is selected to attract and exterminate gray silverfish. Preferably, the insecticide is chosen from the group of neonicotinoids. The insecticide 130 is covered by an attraction site cover 140 that together with the carrying tape 110 seals off the insecticide 130. In some cases, the insecticide 130 is provided on an insecticide carrying member. In other cases, the insecticide 130 is applied directly to the carrying tape 110 during manufacture. The carrying tape 110 may be fabricated from a wide selection of materials, such as paper, cloth, or polymers. The device 100 is intended to be deployed, e.g., on a floor along a wall where the gray silverfish are found. Thus, quite relaxed mechanical properties are required of the carrying tape 110. Basically, any type of tape may be used that is sufficiently strong to be easily handled while being deployed on the floor. However, it may be an advantage using a polymer tape if the device is to be used in a wet or humid environment. To prevent the device from being moved over the floor, e.g. by draft or mechanical influence, the carrying tape may for instance be provided with one or more adhesive regions (not shown) on an opposite side from the attraction sites 120.

Figure 1b is a cross-sectional view along the line A-A in Fig. 1a, i.e. showing a cross section of an attraction point 120. The insecticide 130 is shown to be disposed on the carrying tape 110, and being covered by the attraction site cover 140. In this embodiment, the attraction site cover 140 and the carrying tape 110 is seen to form a space 145 surrounding the insecticide 130. The attraction site cover 140 is made to be penetrable by the gray silverfish, e.g. by them chewing their way through. Since the insecticide is fully covered until gray silverfish penetrate the attraction site cover 140, the device may be considered safe for non-professional users, children, pets, etc. Thus, the attraction site cover 140 may generally be made from any material the gray silverfish can chew through. In some embodiments, the attraction site cover 140 is made from paper or cardboard, which are known food sources for gray silverfish. This may help attract the gray silverfish to consume the insecticide 130. In other embodiments, the attraction site cover 140 may be made from gelatin, which may be consumed by the gray silverfish and provide a substantially airtight seal of the insecticide until penetrated.

Figure 1c is a cross-sectional view along the line A-A in Fig. 1a according to another embodiment. The figure corresponds to Figure 1b. Therefore, only the differences between the two embodiments are discussed here. In this embodiment, no space 145 is provided between the insecticide 130 and the attraction site cover 140.

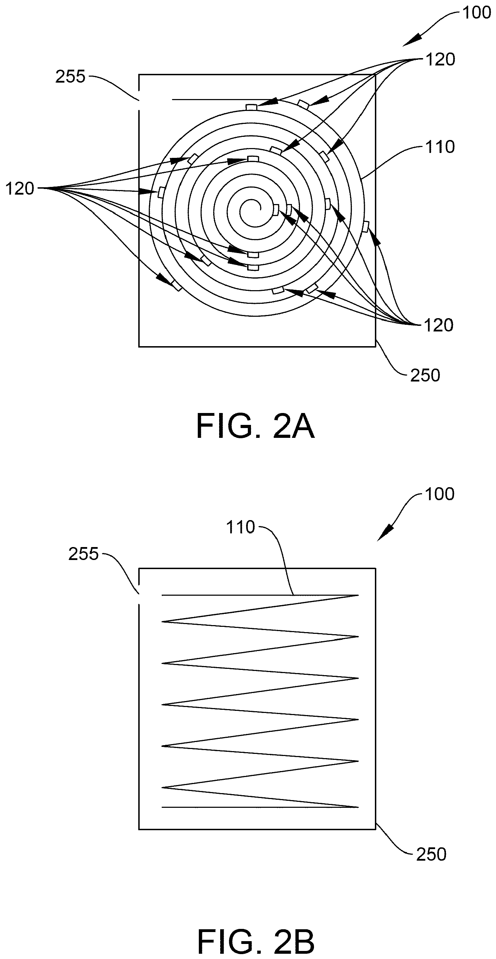

Figure 2a and 2b illustrates different embodiments of the device 100 according to the invention, in which the carrying tape 110 is arranged for storage in a housing 250. The housing comprises an opening 255 through which the carrying tape 110 may be retrieved for deployment at an area to be treated. Thus, the user may simply pull out the needed length of carrying tape 110 to cover the desired area, e.g. the length of a wall.

In figure 2a, the carrying tape 110 is shown to be stored in a coiled up configuration inside the housing 250. The carrying tape 110 shown here is illustrated with multiple attraction sites 120 to indicate that any number of two or more attraction sites is envisioned by the inventor. In some cases, the gray silverfish may even enter the housing 250, attracted by any attraction sites still stored with the carrying tape 110 inside the housing. The device 100 is also effective in this case, since the gray silverfish would still be able to reach the insecticide inside the attraction sites 120, despite being inside the housing. In some cases, this mode of deployment may even be preferred.

In figure 2b, the carrying tape 110 is shown to be stored in an accordion-fold configuration inside the housing 250. For clarity, the attraction points are not shown in this figure. This embodiment provides an alternative to the one shown in figure 2a.

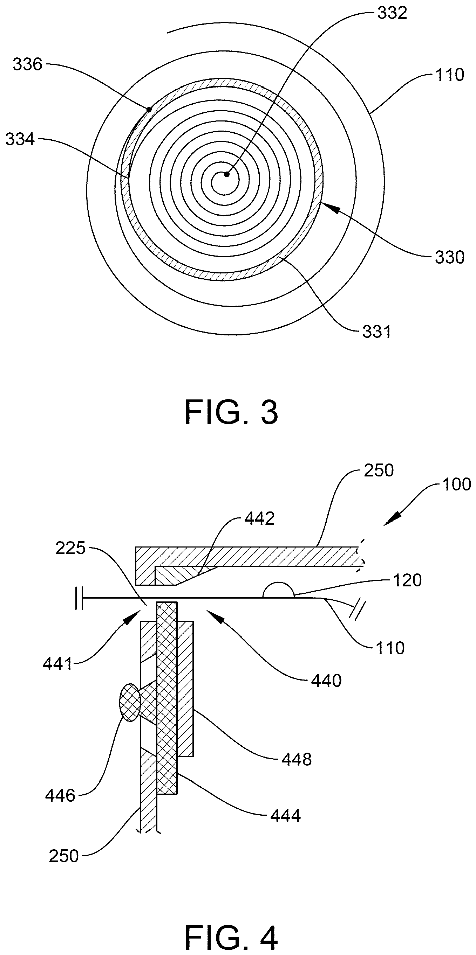

Figure 3 schematically illustrates details of an embodiment of the device according to the invention, in which the carrying tape 110 is mounted to and coiled around a torsion spring assembly 330. This kind of arrangement is for instance known from tape measures, and enables the carrying tape 110 to be recoiled or retracted back into the housing (not shown) by the mechanical energy stored in the torsion spring assembly. The torsion spring assembly 330 comprises a torsion spring having a first side 332 and a second side 334. When torsion is applied between the two sides 332, 334, mechanical energy is stored in the system, for later release. The first side of the torsion spring may be fixedly mounted to the housing 250, while an inner end 336 of the carrying tape 110 is mounted to the second side of the torsion spring 334. In some embodiments, the carrying tape 110 is mounted directly to the second side of the torsion spring 334. In other embodiments, the second side of the torsion spring 334 connects to an inside of a spool 331, and the inner end 336 of the carrying tape 110 being connected to an outside of the spool.

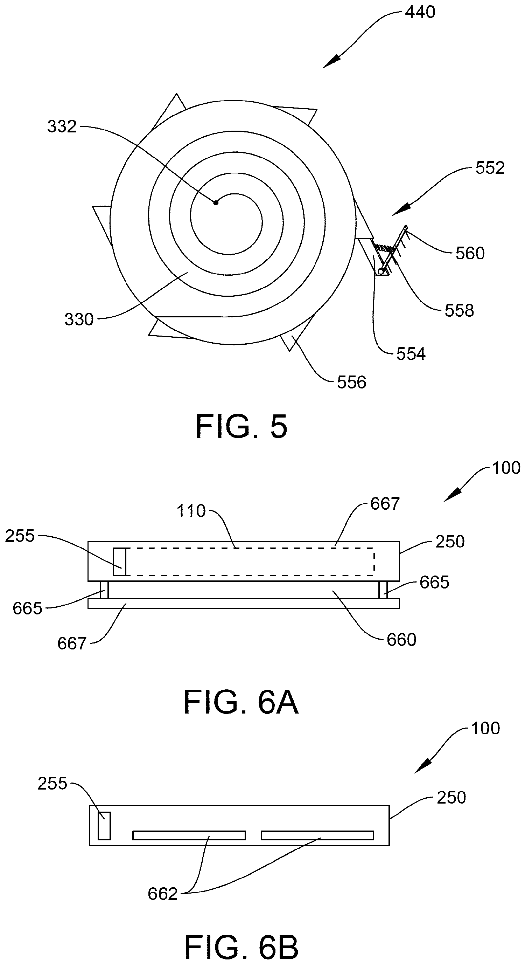

Figure 4 schematically shows details of an embodiment of the device according to the invention. Specifically, this embodiment comprises a locking mechanism 440 to prevent the carrying tape 110 from moving in or out of the housing 250. This is especially convenient for embodiments also comprising the torsion spring assembly, since the locking mechanism 440 may then fixate the carrying tape 110 at a desired length where the torsion spring assembly would otherwise act to withdraw the carrying tape 110 back into the housing. Different types of useful locking mechanisms may be envisioned and are considered a part of the present invention. In the embodiment shown here, the locking mechanism 440 comprises a friction brake 441 arranged near the opening 255 in the housing 250. The friction brake 441 comprises a first brake block 442 fixed to the housing 250, and a second brake block 444 that is movably attached to the housing 250, for instance held in place by an anchor point 448. The friction brake 441 is operable in two positions: an open position in which the carrying tape 110 may freely pass between the first brake block 442 and the second brake block 444, and a brake position in which the second brake block 444 is brought in contact with the carrying tape 110 and simultaneously bringing the carrying tape 110 in contact with the first brake block 442. Thus, in the brake position, the two brake blocks 442, 444 are brought together to apply friction to the carrying tape 110. To allow a user to alternate between the open position and the brake position, the locking mechanism may be equipped with a sliding knob 446, or another type of control. The second brake block 444 may optionally be biased towards the brake position with a suitable biasing member, such as a spring (not shown), or the like. To avoid the attraction sites 120 being damaged or getting stuck in the locking mechanism 440 when the carrying tape 110 is pulled out of the housing 250, the first brake block 442 may optionally be provided with a tapered shape towards the inner cavity of the housing 250, as seen in this figure. Figure 5 illustrates an alternative type of locking mechanism 440, in the form of a torsion spring lock 552. The torsion spring lock 552 is seen to be integrated with the torsion spring assembly 330, wherein the first side of the torsion spring 332 is fixated to the housing 250 (not shown), and the second side of the torsion spring 334 is connected to a ratchet spool 556 that is rotatable within the housing. The torsion spring lock 552 further comprises a pawl 554, biased with a spring 558 and configured to engage with the ratchet spool 556 to only allow rotation of the ratchet spool 556 in one direction. Thus, the carrying tape 110 is allowed to be pulled from the housing for deployment, while retraction of the carrying tape 110 by the torsion spring assembly 330 is prevented by the pawl 554 and ratchet spool 556. The torsion spring lock 552 may be released by the user to allow retraction of the carrying tape 110, for instance by pressing a release button (not shown), or alternatively by a release mechanism sensitive to a slight pull on the carrying tape 110 from a locked position. Release by pressing a button is similar to the mechanism commonly used to recoil the power cord on many vacuum cleaners, while the release mechanism as described is similar to the mechanism found on common roller blinds. Thus, the skilled person will readily know how to implement such mechanisms as known in the state of the art.

Figure 6a and 6b shows side views of two embodiments of the device 100 according to the invention. More specifically, the figures show two variations of the housing 250 that are configured to provide enhanced access for the gray silverfish into the inner cavity of the housing 250. Common to both figure 6a and 6b are the opening 255 for deployment of the carrying tape 110, as also illustrated in the figures above. In figure 6a, the housing 250 further comprises an entry 660 for the gray silverfish to crawl through to get inside the housing. The inventor has found that a height of the entry of about 1-5mm is advantageous for allowing the gray silverfish access. The entry 660 is shown to span most of a width of the housing 250, sparing room for mechanical supports 665 towards corners thereof. In one embodiment of the housing 250 comprises a container section 667 and a lid section 669 that together act to form the inner cavity. For storage and shipping, the two sections may be collapsed into a closed or engaged state. Then for deployment, the two sections may be moved into a separated state, thereby forming the entry 660 and at the same time providing a space around the carrying tape 110 to provide access for the gray silverfish to reach different parts of the carrying tape. For instance, the mechanical supports 665 may provide a sliding connection between the two section 667, 669, while providing a sufficient friction to maintain a desired sliding position. Alternatively, mechanical stops may be arranged to snap the two sections either in the engage state or in the separated state.

Figure 6b shows an alternative configuration of the housing 250 featuring multiple entries 662 along the side of the housing. The number of entries 662 may be larger than the two shown, such as 3, 4, 5, or even more per side, and having entries on two or more sides of the housing 250.

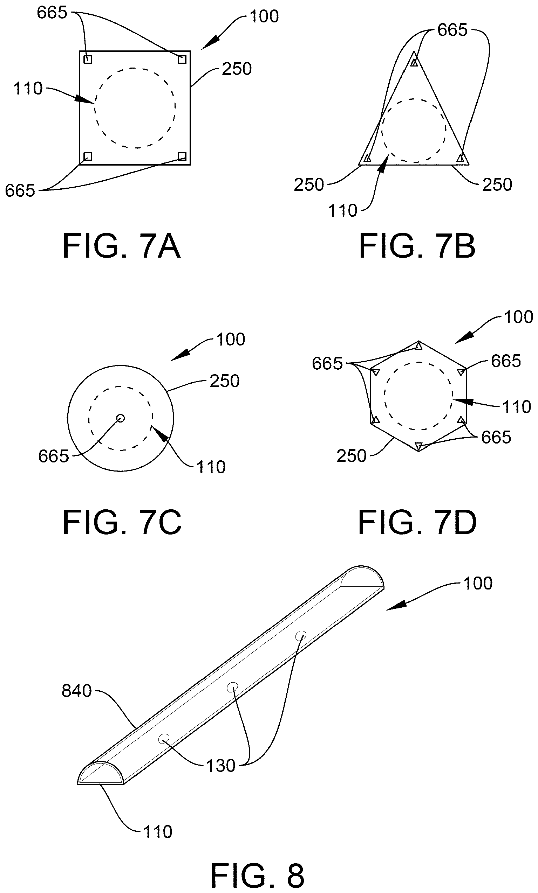

Figure 7 a-d show examples of different possible geometries for different embodiments of the housing 250 of the invention. Figure 7a shows a housing 250 with a substantially square geometry, in which mechanical supports 665 are located in the corners. In this example, supports 665 are shown in each corner, i.e. four suports, but in some embodiments, 1, 2, or 3 supports may be sufficient.

Figure 7b shows a housing 250 with a triangular geometry, which is otherwise similar to example of figure 7a.

Figure 7c shows a housing 250 with a circular geometry. In this case, a single mechanical support 665 in the center of the housing 250 may be advantageous. In such embodiments comprising the container section and the lid section, the mechanical support 665 may be configured to allow the two sections to threadedly engage via the single mechanical support 665. Thus, the lid section may be screwed towards the container section to close the housing, or screwed away from the container section to open the housing. The skilled person will realize that the geometries shown in figures 7a-7d are merely examples and that many other variations may made without deviating from the scope of the present invention.

Figure 8 illustrates an embodiment of the device 100, wherein the carrying tape 110 comprises a number of attraction sites comprising insecticide 130 that are covered by a common attraction site cover 840. In some embodiments, the common attraction site cover 840 extends substantially over the full length of the carrying tape 110. In alternative embodiments, the device 100 may comprise two or more sections, each covered by a common attraction site cover 840. The common attraction site cover 840 otherwise resembles the attraction site covers 140 discussed above when discussing figure 1, i.e. with respect to choice of material, properties, etc. Thus, similar considerations apply to the common attraction site cover 840.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### LIST OF REFERENCES

- 100: device
- 110: carrying tape
- 120: attraction site
- 130: insecticide
- 140: attraction site cover
- 145: space
- 250: housing
- 255: opening
- 330: torsion spring assembly
- 331: spool
- 332: first side of torsion spring
- 334: second side of torsion spring
- 336: inner end of the carrying tape
- 440: locking mechanism
- 441: friction brake
- 442: first brake block
- 444: second brake block
- 446: sliding knob
- 448: anchor point
- 552: torsion spring lock
- 554: pawl
- 556: ratchet spool
- 558: biasing member
- 560: anchor point
- 660,662: entry
- 665: mechanical supports
- 667: container section
- 669: lid section
- 840: common cover

## Claims

1. A device for controlling gray silverfish Ctenolepisma longicaudatum, the device comprising a carrying tape, the device further comprising two or more attraction sites arranged along the carrying tape in a mutual distance, wherein the attraction site comprises an insecticide and an attraction site cover, wherein the attraction site cover is adapted to together with the carrying tape enclosing the insecticide for controlling gray silverfish, the attraction site cover is further adapted to be penetrable by gray silverfish.

2. The device according to claim 1, wherein the device comprises at least three attraction sites, such as at least five attraction sites, or even at least 10 attraction sites.

3. The device according to any one of the preceding claims, wherein the mutual distance with which the attraction points are arranged along the carrying tape is in the range of about 0.1 m to about 1.0 m, such about 0.2 m to about 0.8 m, or even about 0.3 m to about 0.5 m.

4. The device according to any one of the preceding claims, wherein the attraction site cover is at least partly made from paper or cardboard.

5. The device according to claim 4, wherein the paper or cardboard contains at least 65% paper or cardboard made from sulphite pulp, such as at least 75% sulphite pulp, or even at least 80% sulphite pulp.

6. The device according to any one of claims 1-3, wherein the attraction site cover is or comprises gelatin.

7. The device according to any one of the preceding claims, wherein the carrying tape has a length of at least about 0.5 m up to about 5 m, such as at least about 1.0 m to about 4 m, or even at least about 1.5 m to about 3 m.

8. The device according to any one of the preceding claims, wherein the carrying tape has a width from 3 mm to 20 mm, such as from 5 mm to 15 mm, or even from 7 mm to 12 mm.

9. The device according to any one of the preceding claims, wherein the insecticide is or comprises a neonicotinoid.

10. The device according to any one of the preceding claims further comprising a housing, the housing comprising an inner cavity adapted for taking up the carrying tape in a stored state, the housing further comprising an opening for retrieving the carrying tape into a deployed state.

11. The device according to claim 10, wherein the carrying tape is coiled up when in the stored state.

12. The device according to any one of claims 10-11, wherein the device further comprises a torsion spring assembly, wherein a first side of the torsion spring assembly is fixated to the housing and a second side of the torsion spring assembly is attached to the carrying tape, the torsion spring assembly being arranged to allow the carrying tape to be extendable from the stored state to the deployed state, and to allow the carrying tape be retractable from the deployed state to the stored state.

13. The device according to any one of claims 10-12, wherein the device further comprises a locking mechanism for maintaining the carrying tape extended in the deployed state.

14. The device according to claim 10, wherein the carrying tape is configured in an accordion fold when in the stored state.

15. The device according to any one of claims 10-14, wherein the housing comprises an entry for gray silverfish, the entry providing access between an outside of the housing to an inner cavity of the housing, wherein the inner cavity stores the carrying tape in the stored state.

16. The device according to claim 15, wherein the entry is a slit, the slit having a smallest dimension in the range of 1mm to 5 mm, such as 2 mm to 4 mm, or even about 3 mm.
